# EUROPÄISCHE PATENTSCHRIFT

(11) **EP 3 447 463 B1**
(45) Veröffentlichungstag und Bekanntmachung des Hinweises auf die Patenterteilung: **09.10.2019**
(21) Anmeldenummer: 17187670.9
(22) Anmeldetag: 24.08.2017
(51) Int. Cl.: G01L 1/18, D03D 1/00, G06F 3/041, G06F 3/047, D02G 3/44, D03D 15/00

(54) **DRUCKSENSOR**
PRESSURE SENSOR
CAPTEUR DE PRESSION

(43) Veröffentlichungstag der Anmeldung: 27.02.2019
(73) Patentinhaber: Sefar AG, 9410 Heiden (CH)
(72) Erfinder: SONDEREGGER, Uriel, 9424 Rheineck (CH); CHABRECEK, Peter, 9403 Goldach (CH); GASCHLER, Werner, 9425 Thal (CH)
(74) Vertreter: Wunderlich & Heim Patentanwälte Partnerschaftsgesellschaft mbB

(56) Entgegenhaltungen:
- EP-A1- 3 163 272
- WO-A1-2017/039401
- US-A- 6 155 120
- US-A1- 2014 150 573
- US-B2- 6 543 299

## Beschreibung

Die Erfindung betrifft einen Drucksensor mit mindestens einem Textilelement, welches Fäden aufweist, von denen zumindest ein Teil elektrisch leitend ausgebildet ist, gemäß dem Oberbegriff des Anspruchs 1 oder Anspruch 2.

Ein Drucksensor geht beispielsweise aus der DE 60111510 T2 hervor. Dieser Detektor weist eine erste Schicht und eine zweite Schicht auf, welche aus einem elektrisch leitfähigen Gewebe gebildet sind. Zwischen den beiden leitfähigen Geweben sind Zwischenschichten angeordnet. Die mittlere Zwischenschicht ist druckempfindlich ausgebildet, so dass sich bei Druckbeaufschlagung eine Widerstandsänderung ergibt.

Die EP 2 040 053 A1 offenbart einen Drucksensor, der eine Stützgewebeschicht aufweist, auf der eine leitende Schicht mit leitenden Fluiden auf einer Grundschicht aufgebracht ist.

Aus der GB 2 341 932 A ist ein Positionssensor bekannt, der aus zwei leitfähigen Geweben aufgebaut ist. Die Gewebe sind voneinander getrennt, wobei sich zwischen den beiden leitfähigen Geweben bei mechanischer Beaufschlagung eine Potentialänderung ergibt.

Die US 2014/0020473 A1 offenbart einen einlagigen Drucksensor mit einem Gewebe, das zumindest teilweise aus elektrisch leitfähigen Fäden gebildet ist. Hinsichtlich der Funktionsweise ist angegeben, dass eine mechanische Beanspruchung eine Längenänderung der leitfähigen Fäden und damit eine Widerstandsänderung bewirkt. Zur Herstellung der leitfähigen Fäden wird ein Material angegeben, welches Nickel, Kupfer oder Aluminium aufweist.

Ein textilartiger Drucksensor, welcher insbesondere zum Einbau in einen Fahrzeugsitz vorgesehen ist, geht zudem aus der EP 2 816 334 B1 hervor.

Aus der EP 1 861 687 B1 ist ein Drucksensor mit einer Membran aus einem piezoresistiven Material bekannt. Als piezoresistives Material ist insbesondere ein piezoresistives Polymer vorgesehen.

Ein gattungsgemäßer Drucksensor ist aus der US 6,543,299 B2 bekannt. Dieser Drucksensor weist piezoresistive Fäden auf, welche einen Draht als Kernfaden besitzen. Auf dem Kernfaden ist eine Hüllschicht aus dem piezoresistiven Material angeordnet oder der Kernfaden ist mit Fäden aus dem piezoresistiven Material umwickelt.

Aus der EP 3 163 272 A1 geht ebenfalls ein Drucksensor mt piezoresistiven Fäden hervor, bei welchem Kupferdraht mit einer Hüllschicht aus dem piezoresistiven Material versehen ist.

Die US 2014/0150573 A1 und die WO2017/039401 A1 offenbaren Drucksensoren, welche Fäden aus piezoresistivem Material aufweisen.

Aus der US 6,155,120 A1 ist ein Drucksensor mit einem Gitter oder Gewebe aus elastischen Kunststofffäden bekannt. Das Gitter oder Gewebe wird mit einer Beschichtung oder Imprägnierung aus einem piezoresistiven Material versehen.

Textilartige flächige Drucksensoren werden beispielsweise in Fahrzeugsitzen verbaut, um die Belegung eines Sitzes mit einer Person festzustellen. Abhängig von der Sitzbelegung kann etwa eine Warnanzeige zum Anlegen eines Sicherheitsgurtes aktiviert oder deaktiviert werden.

Der Erfindung liegt die **Aufgabe** zugrunde, einen Drucksensor mit einem Textilelement anzugeben, welcher einfach aufgebaut sowie besonders robust und zuverlässig ist.

Die Aufgabe wird nach der Erfindung durch einen Drucksensor mit den Merkmalen des Anspruchs 1 beziehungsweise des Anspruchs 2 gelöst. Bevorzugte Ausführungsformen des erfindungsgemäßen Drucksensors sind in den abhängigen Ansprüchen angegeben.

Bei dem erfindungsgemäßen Drucksensor ist vorgesehen, dass mindestens ein Faden des Textilelements als ein piezoresistiver Faden ausgebildet ist, welcher zumindest teilweise aus einem piezoresistiven Material gebildet ist, welches unter Druckkrafteinwirkung seinen elektrischen Widerstand ändert.

Ein wesentlicher Aspekt der Erfindung besteht darin, bei einem Drucksensor mit einem Textilelement ein piezoresistives Material einzusetzen. Dabei besteht die Besonderheit darin, mit dem piezoresistiven Material Fäden herzustellen, welche zu den Textilelementen verwebt werden. Das piezoresistive Material ist elektrisch leitend und verändert unter Druckkrafteinwirkung seinen elektrischen Widerstand.

Gegenüber einer Membran oder einem Film weist ein Textilelement aus piezoresistiven Fäden eine erhöhte Festigkeit bei gleichzeitig verbesserter Durchlässigkeit für Luft und Feuchtigkeit auf. Auch kann ein exaktes und besonders sensibles Ansprechverhalten des Drucksensors mit piezoresistiven Fäden erzielt werden.

Nach der Erfindung ist vorgesehen, dass der piezoresistive Faden einen Kernfaden aufweist, welcher mit einer Beschichtung umhüllt ist, welche aus dem piezoresistiven Material gebildet ist. Piezoresistive Materialien sind grundsätzlich bekannt. Diese sind vorzugsweise aus einem Polymermaterial gebildet, welches mit entsprechenden Zusätzen, wie Metallionen und/oder Kohlenstoffpartikeln, versehen ist. Besonders bevorzugt umfasst das Polymer ein Polyamid, insbesondere Nylon, Polyethylen, Polypropylen, Polystyrol, Fluoropolymer oder Polyurethan. Vorteilhaft sind auch acrylbasierte piezoresistive Polymere. Insbesondere ist Polystyrol-Co-Acrylonitril 80/20 einsetzbar. Der Kernfaden kann für eine gewünschte Festigkeit des Gesamtfadens aus einem geeigneten Material gebildet sein, etwa einem Metall oder einem Polymer, welches insbesondere elektrisch leitend ist. Der Kernfaden ist ein Multifilfaden oder eine Litze aus mehreren Fäden.

Eine weitere bevorzugte Ausführungsform der Erfindung besteht darin, dass der Kernfaden elektrisch leitend und aus einem Metall, einer Metalllegierung oder einem elektrisch leitenden Kunststoff gebildet ist. Die Umhüllung aus dem piezoresistiven Material wird auf den Kernfaden aufgebracht, bevor der so gebildete Faden zu dem Textilelement verwebt wird. Das Metall oder die Metalllegierung kann insbesondere Kupfer, Eisen, Nickel und/oder ein anderes leitendes Metall aufweisen. Der Kunststoff kann ein beliebiges Polymer sein, welches mit einer leitenden Beschichtung oder durch entsprechende leitende Zusätze in die Kunststoffmasse versehen ist. Vorzugsweise bildet der Kernfaden 40% bis 95% des Fadendurchmessers.

Nach der Erfindung ist vorgesehen, dass der piezoresistive Faden als eine Litze ausgebildet ist, welche aus mehreren piezoresistiven Unterfäden oder Fasern gebildet ist. Dabei kann jeder Unterfaden einstückig oder mit einem Kernfaden mit einer piezoresistiven Umhüllung ausgebildet sein. Die mehreren Unterfäden oder Fasern können gleich oder unterschiedlich ausgebildet sein und können zum Bilden der Litze miteinander verdrillt werden.

Erfindungsgemäß ist es, dass der piezoresistive Faden einen Fadendurchmesser von 50 µm bis 500 µm aufweist. Hierdurch können insbesondere auch sehr feine Textilelemente erstellt werden. Eine Maschenweite des gewebten Textilelementes kann vorzugsweise zwischen 10 µm bis 500 µm aufweisen. Hierdurch können sehr feine, leichte und großflächige Drucksensoren mit guter Stabilität und Festigkeit hergestellt werden.

Grundsätzlich kann das Textilelement für die Erfindung aus dem einen oder den mehreren piezoresistiven Fäden in jeder geeigneten Weise hergestellt werden, etwa durch Stricken oder Wirken. Besonders vorteilhaft ist es nach einer Weiterbildung der Erfindung, dass das Textilelement als ein Gewebe mit Kettfäden und Schussfäden ausgebildet ist. Es bestehen definierte Kreuzungspunkte, die als Kontakt- und Messpunkte dienen können.

Besonders vorteilhaft ist es dabei, dass der Drucksensor eine einzelne Gewebelage aufweist, in welcher piezoresistive Fäden in Kett- und/oder Schussrichtung verwebt sind. In bestimmten Fällen kann ein Verweben der piezoresistiven Fäden nur in einer Richtung zweckmäßig sein. In diesen Fällen weist die Gewebelage in der anderen Richtung vorzugsweise ein oder mehrere elektrisch leitende Fäden auf. Somit wird an den Kreuzungspunkten der Fäden ein elektrischer Kontakt gebildet, wobei sich ein elektrischer Widerstand am Kontaktpunkt aufgrund des piezoresistiven Materials an zumindest einem der sich kreuzenden Fäden bei einer Druckbeaufschlagung verändert, also erhöht oder insbesondere vermindert. Durch Anlegen eines entsprechenden Messstromes kann so durch die erwirkte Widerstandsänderung eine Kraftbeaufschlagung an einem oder mehreren der Kreuzungspunkte detektiert werden.

Ein besonders zweckmäßiger Aufbau wird nach einer Ausführungsvariante der Erfindung dadurch erzielt, dass der Drucksensor durch die einzelne Gewebelage gebildet ist und dass die piezoresistiven Fäden in einem seitlichen Randbereich der Gewebelage mit einer Steuereinheit kontaktierbar sind. An den seitlichen Randbereichen der Gewebelage können hinlänglich bekannte elektrische Verbindungselemente vorgesehen sein, welche dann mit einer entsprechenden Steuer- oder Messeinheit verbunden werden. Mittels der Steuer- oder Messeinheit kann dann durch Anlegen eines entsprechenden Stromes eine Widerstandsänderung in einzelnen Abschnitten der Gewebelage bestimmt werden.

Eine alternative vorteilhafte Ausgestaltungsform der Erfindung besteht darin, dass eine piezoresistive Gewebelage weitgehend oder insgesamt aus piezoresistiven Fäden gewebt ist und dass eine Kontaktierung der piezoresistiven Gewebelage mit einer Steuereinheit mindestens eine Kontaktlage auf der Oberseite und/oder Unterseite vorgesehen ist. Es wird so ein mehrschichtiger Drucksensor erreicht, bei welchem die eigentliche druckempfindliche Gewebelage teilweise oder insgesamt aus piezoresistiven Fäden gewebt ist. Vorzugsweise ist diese piezoresistive Gewebelage sandwichartig von einer oberen und einer unteren Kontaktlage umgeben, welche flächig auf der piezoresistiven Gewebelage aufliegen. Diese Kontaktlagen können grundsätzlich beliebig ausgebildet sein, etwa als Membrane oder Folien mit aufgedruckten Leiterbahnen.

Nach einer Weiterbildung der Erfindung ist es besonders vorteilhaft, dass die mindestens eine Kontaktlage ein Gewebe aufweist, welches mit elektrisch leitfähigen Fäden und elektrisch nicht leitfähigen Fäden gebildet ist. Damit kann auch die Kontaktlage als ein stabiles Textilelement, insbesondere ein besonders robustes Gewebe ausgebildet sein. Die elektrisch leitfähigen Fäden sind vorzugsweise als streifenförmige Leiterbahnen ausgebildet. Diese ragen vorzugsweise einseitig an einer Kontaktseite aus dem Gewebe hervor. Besonders vorteilhaft ist es, wenn die der Kontaktseite gegenüberliegende Rückseite insgesamt elektrisch nicht leitend ist.

Die umgebenden Kontaktlagen können gleichzeitig auch eine Stütz- und/oder Schutzschicht für die dazwischen angeordnete piezoresistive Gewebelage darstellen.

Ein besonders empfindlicher Drucksensor wird nach einer Ausführungsvariante der Erfindung dadurch erreicht, dass in einer ersten Gewebelage sich die elektrisch leitfähigen Fäden in einer ersten Richtung und in einer zweiten Gewebelage die elektrisch leitfähigen Fäden sich in einer zweiten Richtung erstrecken, welche quer zur ersten Richtung verläuft. In Dickenrichtung der Gewebelagen bestehen somit nur einzelne, eng begrenzte Kontaktbereiche. Ein Stromfluss in diesen Kontaktbereichen wird durch die dazwischen angeordnete piezoresistive Gewebelage bestimmt, welche abhängig von einer Druckkrafteinwirkung ihren Widerstand und damit ihre elektrische Leitfähigkeit ändern.

Der erfindungsgemäße Drucksensor ist insbesondere an Sitzen, etwa bei Fahrzeugen, als ein Belegungserkennungssensor einsetzbar. Jedoch ist die Erfindung nicht auf diese Anwendung beschränkt. Vielmehr kann die Erfindung auch als ein besonders robuster und feiner Drucksensor in einer Vielzahl von anderen Anwendungsfällen eingesetzt werden.

Ein Herstellungsverfahren ist dadurch gekennzeichnet, dass mindestens ein piezoresistiver Faden verwendet wird, welcher zumindest teilweise aus einem piezoresistiven Material gebildet wird, und dass das Textilelement des Drucksensors mit dem mindestens einen piezoresistiven Faden hergestellt wird. Mit dem Verfahren kann insbesondere ein erfindungsgemäßer Drucksensor hergestellt werden, wie er vorausgehend beschrieben worden ist. Mit dem piezoresistiven Fäden kann ein Textilelement in ansonsten herkömmlicher Weise gefertigt, insbesondere gewebt, gestrickt oder gewirkt werden.

Nachfolgend wird die Erfindung anhand von bevorzugten Ausführungsbeispielen weiter beschrieben, welche schematisch in den beigefügten Zeichnungen dargestellt sind. In den Zeichnungen zeigen:
- Fig. 1: eine schematische und vergrößerte Teilquerschnittsansicht zu einem erfindungsgemäßen Drucksensor;
- Fig. 2: eine Draufsicht auf den Drucksensor von Fig. 1 in verkleinertem Maßstab;
- Fig. 3: eine schematische und vergrößerte Teilquerschnittsansicht durch einen Drucksensor, der nicht Teil der Erfindung ist;
- Fig. 4: eine schematische Draufsicht auf den Drucksensor von Fig. 3 in einem verkleinerten Maßstab;
- Fig. 5: eine schematische und vergrößerte Teilquerschnittsansicht zu einem erfindungsgemäßen Drucksensor;
- Fig. 6: eine schematische und vergrößerte Teilquerschnittsansicht zu einer weiteren Ausführungsform eines erfindungsgemäßen Drucksensors;
- Fig. 7: eine schematische und vergrößerte Teilquerschnittsansicht zu einem erfindungsgemäßen Drucksensor mit mehrlagigem Aufbau; und
- Fig. 8: eine schematische Draufsicht auf den Drucksensor von Fig. 7 in einem verkleinerten Maßstab.

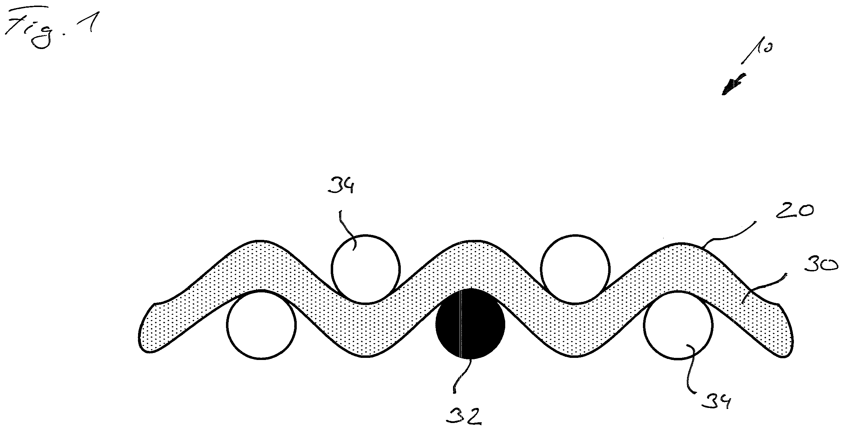

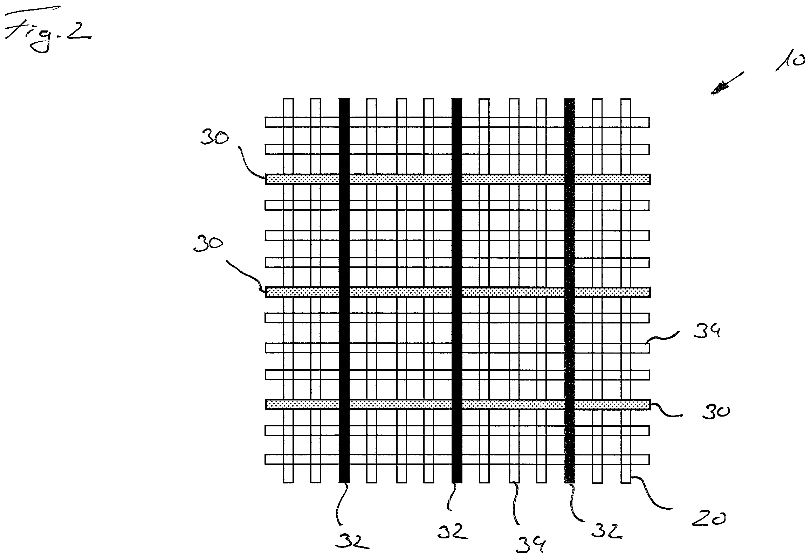

Eine erste Ausführungsform eines erfindungsgemäßen Drucksensors 10 ist in den Figuren 1 und 2 dargestellt. Der Drucksensor 10 ist als ein Textilelement 20 ausgebildet, welches als ein einlagiges Gewebe gefertigt ist. Das Textilelement 20 ist zu einem wesentlichen Teil aus elektrisch nicht-leitenden Fäden 34 gebildet, welche sowohl in Schuss- als auch in Kettrichtung verwebt sind. In Kettrichtung sind in dem dargestellten Ausführungsbeispiel mit einem Abstand von jeweils drei elektrisch nicht-leitenden Fäden 34 parallel verlaufende elektrisch leitende Fäden 32 angeordnet. Mit einem entsprechenden Abstand sind in Schussrichtung parallel verlaufende piezoresistive Fäden 30 in dem Textilelement 20 verwebt. Die piezoresistiven Fäden 30 sind teilweise mit einem piezoresistiven Material gebildet.

Bei dem dargestellten Ausführungsbeispiel sowie auch bei den nachfolgenden Ausführungsbeispielen können die Anordnung der einzelnen Fäden 30, 32, 34 hinsichtlich der Schuss- und der Kettrichtung auch vertauscht sein.

Am Randbereich des einlagigen Drucksensors 10 können Anschlusselemente vorgesehen sein, welche einen Messstrom durch die elektrisch leitenden Fäden 32 und die piezoresistiven Fäden 30 leiten. Bei einer Druckbeaufschlagung quer zur Fläche des gewebten Textilelements 20 ergibt sich an den Kontaktpunkten der sich kreuzenden piezoresistiven Fäden 30 und der elektrisch leitenden Fäden 32 aufgrund der Eigenschaft des piezoresistiven Materials 40 eine Widerstandsänderung. Diese Widerstandsänderung verändert den Stromfluss, so dass diese Änderung als ein Maß für den anliegenden Druck von einer angeschlossenen Mess- oder Steuereinheit erfasst werden kann.

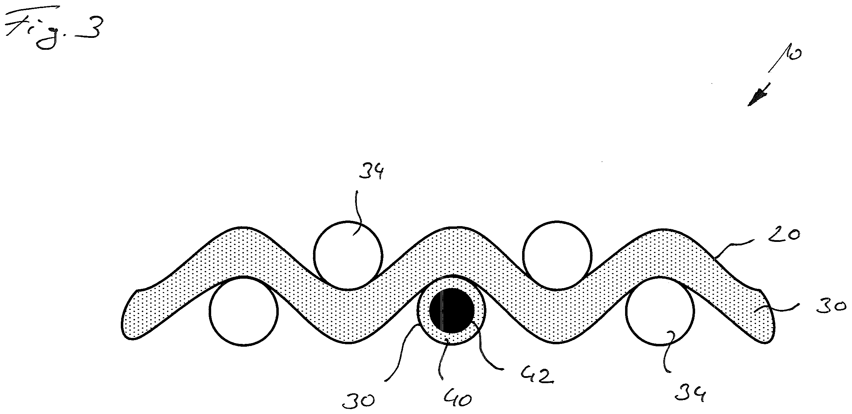

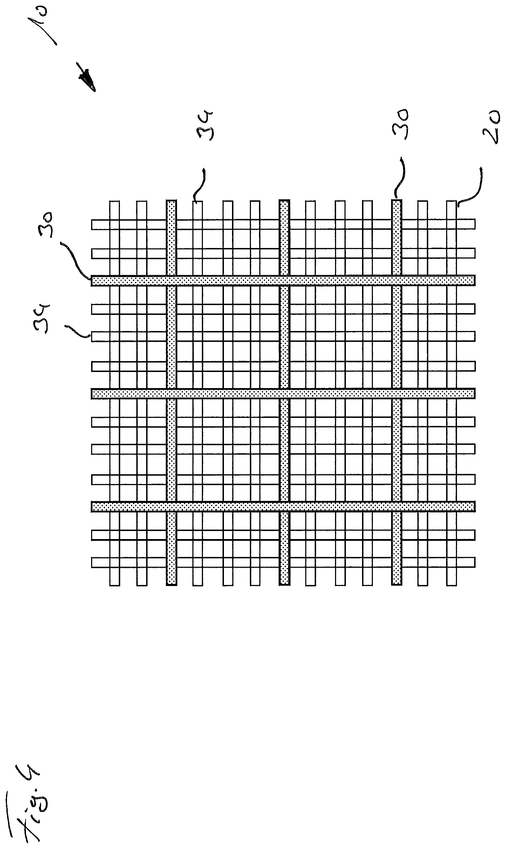

Bei einem Drucksensor 10 gemäß den Figuren 3 und 4, der nicht Teil der Erfindung ist, ist dieser als ein einlagiges Gewebe aus nicht elektrisch nicht-leitenden Fäden 34 und piezoresistiven Fäden 30 ausgebildet. Das so gewebte Textilelement 20 weist die elektrisch nicht-leitenden Fäden 34 und die piezoresistiven Fäden 30 sowohl in Kettrichtung als auch in Schussrichtung auf. Das Textilelement 20 ist also nur aus zwei Arten von Fäden 30, 34 gewebt.

Bei diesem Ausführungsbeispiel des Drucksensors 10 sind zumindest ein Teil der piezoresistiven Fäden 30 zweischichtig mit einem mittigen Kernfaden 42 ausgebildet, auf welchen eine Außenumhüllung aus einem piezoresistiven Material 40 aufgebracht ist. Der Kernfaden 42 ist als ein Monofilfaden aus einem Polymer, etwa PA, PE, PP oder PU ausgebildet. Der Kernfaden 42 kann einen Durchmesser zwischen 10 µm und 400 µm aufweisen. Die Dicke der aufgebrachten Umhüllung aus dem piezoresistiven Material kann eine Dicke von vorzugsweise 10 bis 50% des Durchmessers des Kernfadens 42 aufweisen. Das piezoresistive Material 40 ist grundsätzlich elektrisch leitend, so dass ein piezoresistiver Faden 30 mit einem elektrisch nicht-leitenden Kernfaden 42 gebildet sein kann. Bevorzugt ist der Kernfaden 42 aus einem elektrisch leitenden Material, etwa Metall oder einem elektrisch leitenden Kunststoff, und kann eine stromleitende Funktion übernehmen.

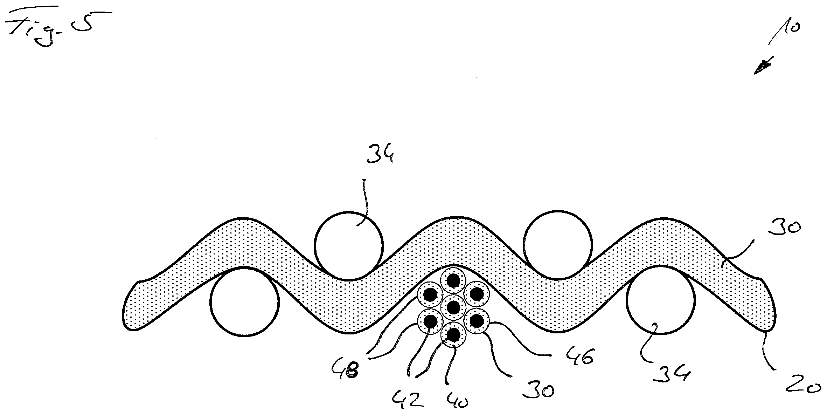

Eine Ausführungsform eines erfindungsgemäßen einlagigen Drucksensors 10 ist in Fig. 5 dargestellt. Der Aufbau entspricht weitgehend dem Drucksensor 10 gemäß den Figuren 1 bis 4. In Abweichung hierzu ist jedoch zumindest ein Teil der piezoresistiven Fäden 30 als eine Litze 46 ausgebildet, welche aus einer Vielzahl von Unterfäden 48 durch Verdrillen gefertigt ist. Ein einzelner Unterfaden 48 weist dabei einen mittigen Kernfaden 42 auf, vorzugsweise aus einem elektrisch leitenden Material, etwa einem Metall, einer Metalllegierung oder einem leitenden Kunststoff. An der Außenseite des Kernfadens 42 ist ein piezoresistives Material 40 aufgebracht. Durch einen derartigen Aufbau des piezoresistiven Fadens 30 aus zahlreichen piezoresistiven Unterfäden 48 wird eine besondere Druckempfindlichkeit auch innerhalb des piezoresistiven Fadens erreicht.

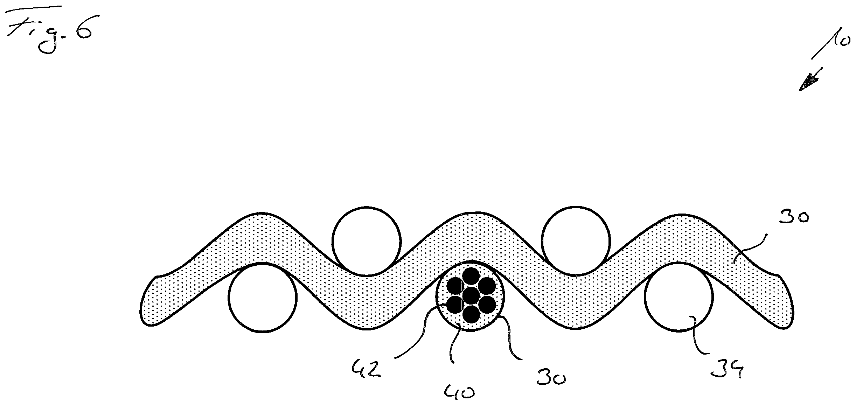

Eine weitere Ausführungsform eines erfindungsgemäßen einlagigen Drucksensors 10 ist aus Fig. 6 zu ersehen. Der grundsätzliche Aufbau entspricht dabei ebenfalls dem Aufbau der vorausgegangenen einlagigen Drucksensoren 10 gemäß den Figuren 1 bis 5. Im Unterschied zu den vorausgegangenen Drucksensoren 10 ist jedoch zumindest ein Teil der piezoresistiven Fäden 30 mit einem Kernfaden 42 ausgebildet, welcher selbst als eine Litze oder ein Multifilfaden mit einer Vielzahl von Teilfäden aufgebaut ist. An der Außenseite des so gebildeten Kernfadens 42 ist eine Umhüllung aus piezoresistivem Material 40 aufgebracht. Auch diese Ausbildung eines piezoresistiven Fadens 30 führt zu einer besonders guten Druckempfindlichkeit.

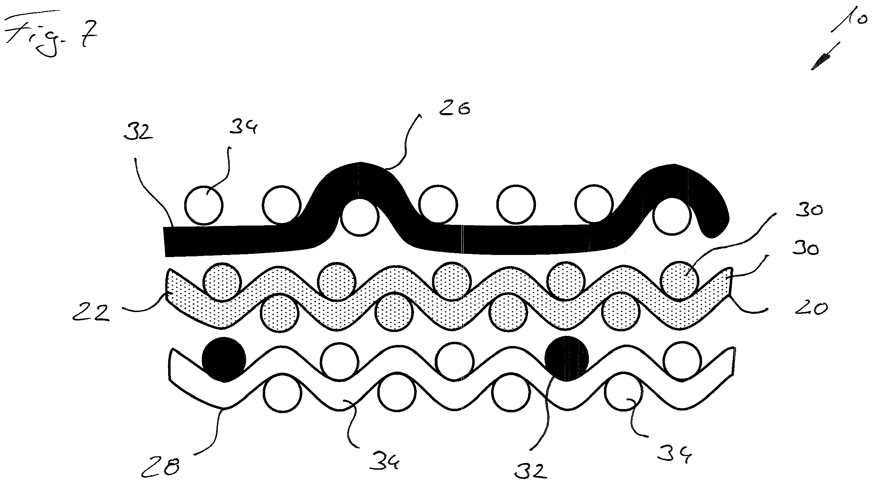

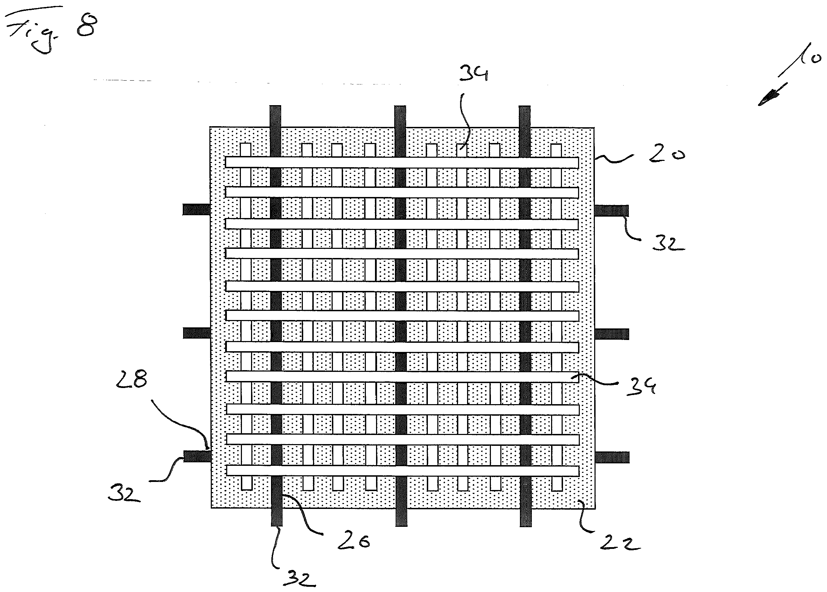

Eine weitere Ausführungsform eines erfindungsgemäßen Drucksensors 10, welcher mehrlagig aufgebaut ist, ist den Figuren 7 und 8 zu entnehmen. Der Drucksensor 10 weist dabei ein Textilelement 20 auf, welches eine obere erste Kontaktlage 26, eine untere zweite Kontaktlage 28 und eine dazwischen angeordnete einzelne Gewebelage 22 aufweist. Die einzelne Gewebelage 22 ist dabei insgesamt in Kett- und in Schussrichtung aus piezoresistiven Fäden 30 gebildet. Die einzelne Gewebelage 22 stellt bei dem mehrschichtig aufgebauten Drucksensor 10 die druckempfindliche piezoresistive Schicht dar. Die Beaufschlagung dieser druckempfindlichen einzelnen Gewebelage 22 mit dem Messstrom erfolgt über die beiden Kontaktlagen 26, 28, welche die erste Gewebelage 22 sandwichartig umgeben. Die erste Kontaktlage 26 ist ein Gewebe, welches elektrisch nichtleitende Fäden 34 sowohl in Kett- als auch in Schussrichtung aufweist, wie insbesondere der Draufsicht von Fig. 8 zu entnehmen ist. In Kettrichtung oder in einer ersten Richtung sind parallel angeordnete elektrisch leitende Fäden 32 in die erste Kontaktlage 26 verwebt.

Die untere zweite Kontaktlage 28 ist grundsätzlich gleich aufgebaut, wobei diese jedoch um 90° verdreht zu der ersten Kontaktlage 26 angeordnet ist. Somit erstrecken sich die elektrisch leitenden Fäden 32 der unteren zweiten Kontaktlage 28 quer und insbesondere senkrecht zu den elektrisch leitenden Fäden 32 der oberen ersten Kontaktlage 26. Die elektrisch leitenden Fäden 32 dienen jeweils zum Anschluss an eine Steuereinheit und zum Einleiten eines Messstroms in den Drucksensor 10. In dem Kreuzungsbereich der sich kreuzenden elektrisch leitenden Fäden 32 ist die erste Gewebelage 22 aus den piezoresistiven Fäden 30 zwischengelagert, so dass sich bei einer Druckbeaufschlagung auf den Drucksensor 10 der Widerstand zwischen den elektrisch leitenden Fäden 32 an den Kreuzungspunkten ändert. Diese Widerstandsänderung kann als ein Maß für den anliegenden Druck durch die Steuereinheit erfasst werden.

Die erfindungsgemäßen Drucksensoren 10 werden nach der Erfindung grundsätzlich so hergestellt, dass zunächst Fäden mit einem piezoresistiven Material gefertigt werden. Die so gebildeten piezoresistiven Fäden 30 werden dann in grundsätzlich bekannter Weise zu dem Textilelement 20 verarbeitet, insbesondere verwebt.

## Patentansprüche

1. Drucksensor mit mindestens einem Textilelement (20), welches Fäden (30, 32, 34) aufweist, von denen zumindest ein Teil elektrisch leitend ausgebildet ist,
wobei mindestens ein Faden des Textilelements (20) als ein piezoresistiver Faden (30) ausgebildet ist, welcher zumindest teilweise aus einem piezoresistiven Material (40) gebildet ist, welches unter Druckkrafteinwirkung seinen elektrischen Widerstand ändert,
**dadurch gekennzeichnet,**
**dass** der piezoresistive Faden (30) einen Kernfaden (42) aufweist, welcher als eine Litze aus mehreren Unterfäden gebildet ist,
**dass** der als Litze ausgebildete Kernfaden (42) mit einer Beschichtung umhüllt ist, welche aus dem piezoresistiven Material (40) gebildet ist, und
**dass** der piezoresistive Faden (30) einen Fadendurchmesser von 50 µm bis 500 µm aufweist.

2. Drucksensor mit mindestens einem Textilelement (20) welches Fäden (30, 32, 34) aufweist, von denen zumindest ein Teil elektrisch leitend ausgebildet ist, wobei mindestens ein Faden des Textilelementes (20) als ein piezoresistiver Faden (30) ausgebildet ist, welcher zumindest teilweise aus einem piezoresistiven Material (40) gebildet ist, welches unter Druckkrafteinwirkung seinen elektrischen Widerstand ändert,
**dadurch gekennzeichnet,**
**dass** der piezoresistive Faden (30) als eine Litze (46) ausgebildet ist, welche aus mehreren Unterfäden (48) gebildet ist, welche jeweils einen Kernfaden (42) mit einer Umhüllung aus piezoresistivem Material (40) aufweisen, und
**dass** der piezoresistive Faden (30) einen Fadendurchmesser von 50 µm bis 500 µm aufweist.

3. Drucksensor nach Anspruch 1 oder 2,
**dadurch gekennzeichnet,**
**dass** der Kernfaden (42) elektrisch leitend und aus einem Metall, einer Metalllegierung oder einem elektrisch leitenden Kunststoff gebildet ist.

4. Drucksensor nach einem der Ansprüche 1 bis 3,
**dadurch gekennzeichnet,**
**dass** das Textilelement (20) als ein Gewebe mit Kettfäden und Schussfäden ausgebildet ist.

5. Drucksensor nach Anspruch 4,
**dadurch gekennzeichnet,**
**dass** der Drucksensor (10) eine einzelne Gewebelage (22) aufweist, in welcher die piezoresistiven Fäden (30) in Kett- und/oder Schussrichtung verwebt sind.

6. Drucksensor nach Anspruch 5,
**dadurch gekennzeichnet,**
**dass** der Drucksensor (10) durch die einzelne Gewebelage (22) gebildet ist und dass die piezoresistiven Fäden (30) in einem seitlichen Randbereich der Gewebelage (22) mit einer Steuereinheit kontaktierbar sind.

7. Drucksensor nach einen der Ansprüche 1 bis 6,
**dadurch gekennzeichnet,**
**dass** eine piezoresistive Gewebelage (24) teilweise oder insgesamt aus den piezoresistiven Fäden (30) gewebt ist und
**dass** für eine Kontaktierung der piezoresistiven Gewebelage (24) mit einer Steuereinheit mindestens eine Kontaktlage (26, 28) auf der Oberseite und/oder Unterseite vorgesehen ist.

8. Drucksensor nach Anspruch 7,
**dadurch gekennzeichnet,**
**dass** die mindestens eine Kontaktlage (26, 28) ein Gewebe aufweist, welches mit elektrisch leitfähigen Fäden (32) und elektrisch nicht-leitfähigen Fäden (34) gebildet ist.

9. Drucksensor nach Anspruch 8,
**dadurch gekennzeichnet,**
**dass** in einer ersten Gewebelage (26) sich die elektrisch leitfähigen Fäden (32) in einer ersten Richtung und in einer zweiten Gewebelage (28) die elektrisch leitfähigen Fäden (32) sich in einer zweiten Richtung erstrecken, welche quer zur ersten Richtung verläuft.

## Claims

1. Pressure sensor with at least one textile element (20) having threads (30, 32, 34), of which at least a part is of electrically conductive design,
wherein at least one thread of the textile element (20) is designed as a piezoresistive thread (30) which is formed at least partially of a piezoresistive material (40) that changes its electrical resistance under application of compressive force,
**characterized in that**
the piezoresistive thread (30) has a core thread (42) which is formed as a strand of several subthreads,
**in that** the core thread (42) designed as a strand is clad with a coating that is formed of the piezoresistive material (40) and
**in that** the piezoresistive thread (30) has a thread diameter of 50 µm to 500 µm.

2. Pressure sensor with at least one textile element (20) having threads (30, 32, 34), of which at least a part is of electrically conductive design,
wherein at least one thread of the textile element (20) is designed as a piezoresistive thread (30) which is formed at least partially of a piezoresistive material (40) that changes its electrical resistance under application of compressive force,
**characterized in that**
the piezoresistive thread (30) is designed as a strand (46) formed of several subthreads (48) which each have a core thread (42) with a cladding of piezoresistive material (40) and
**in that** the piezoresistive thread (30) has a thread diameter of 50 µm to 500 µm.

3. Pressure sensor according to claim 1 or 2,
**characterized in that**
the core thread (42) is electrically conductive and formed of a metal, a metal alloy or an electrically conductive plastic.

4. Pressure sensor according to any one of claims 1 to 3,
**characterized in that**
the textile element (20) is designed as a fabric with warp threads and weft threads.

5. Pressure sensor according to claim 4,
**characterized in that**
the pressure sensor (10) has a single fabric layer (22), in which the piezoresistive threads (30) are interwoven in the warp and/or weft direction.

6. Pressure sensor according to claim 5,
**characterized in that**
the pressure sensor (10) is formed by the single fabric layer (22) and
**in that** the piezoresistive threads (30) can be contacted by way of a control unit in a lateral marginal region of the fabric layer (22).

7. Pressure sensor according to any one of claims 1 to 6,
**characterized in that**
a piezoresistive fabric layer (24) is woven partially or entirely of the piezoresistive threads (30) and
**in that** for a contacting of the piezoresistive fabric layer (24) with a control unit at least one contact layer (26, 28) is provided on the upper side and/or underside.

8. Pressure sensor according to claim 7,
**characterized in that**
the at least one contact layer (26, 28) has a fabric which is formed of electrically conductive threads (32) and electrically non-conductive threads (34).

9. Pressure sensor according to claim 8,
**characterized in that**
in a first fabric layer (26) the electrically conductive threads (32) extend in a first direction and in a second fabric layer (28) the electrically conductive threads (32) extend in a second direction that runs transversely to the first direction.

## Revendications

1. Capteur de pression avec au moins un élément textile (20), lequel présente des fils (30, 32, 34), dont au moins une partie est réalisée de manière à être électriquement conductrice,
dans lequel au moins un fil de l'élément textile (20) est réalisé en tant que fil piézorésistif (30), lequel est formé au moins en partie d'un matériau piézorésistif (40), lequel change de résistance électrique sous l'action d'une force de pression,
**caractérisé en ce**
**que** le fil piézorésistif (30) présente un fil d'âme (42), lequel est réalisé en tant que toron à partir de plusieurs sous-fils,
**que** le fil d'âme (42) réalisé en tant que toron est enveloppé d'un revêtement, lequel est formé du matériau piézorésistif (40), et
**que** le fil piézorésistif (30) présente un diamètre de fil de 50 µm à 500 µm.

2. Capteur de pression avec au moins un élément textile (20) lequel présente des fils (30, 32, 34), dont au moins une partie est réalisée de manière à être électriquement conductrice,
dans lequel au moins un fil de l'élément textile (20) est réalisé en tant que fil piézorésistif (30), lequel est formé au moins en partie d'un matériau piézorésistif (40), lequel change de résistance électrique sous l'action d'une force de pression,
**caractérisé en ce**
**que** le fil piézorésistif (30) est réalisé en tant que toron (46), lequel est formé de plusieurs sous-fils (48), lesquels présentent respectivement un fil d'âme (42) avec une enveloppe en matériau piézorésistif (40), et
**que** le fil piézorésistif (30) présente un diamètre de fil de 50 µm à 500 µm.

3. Capteur de pression selon la revendication 1 ou 2,
**caractérisé en ce**
**que** le fil d'âme (42) est électriquement conducteur et formé d'un métal, d'un alliage métallique ou d'un plastique électriquement conducteur.

4. Capteur de pression selon l'une quelconque des revendications 1 à 3,
**caractérisé en ce**
**que** l'élément textile (20) est réalisé en tant que tissu avec des fils de chaîne et des fils de trame.

5. Capteur de pression selon la revendication 4,
**caractérisé en ce**
**que** le capteur de pression (10) présente une seule couche de tissu (22), dans laquelle les fils piézorésistifs (30) sont tissés dans la direction de la chaîne et/ou de la trame.

6. Capteur de pression selon la revendication 5,
**caractérisé en ce**
**que** le capteur de pression (10) est formé par la seule couche de tissu (22) et
**que** les fils piézorésistifs (30) peuvent être mis en contact avec une unité de commande dans une zone de bord latérale de la couche de tissu (22).

7. Capteur de pression selon l'une quelconque des revendications 1 à 6,
**caractérisé en ce**
**qu'**une couche de tissu piézorésistive (24) est tissée en partie ou complètement à partir des fils piézorésistifs (30) et
**que** pour un contact de la couche de tissu piézorésistive (24) avec une unité de commande, au moins une couche de contact (26, 28) est prévue sur la face supérieure et/ou face inférieure.

8. Capteur de pression selon la revendication 7,
**caractérisé en ce**
**que** l'au moins une couche de contact (26, 28) présente un tissu, lequel est formé de fils électriquement conducteurs (32) et de fils électriquement non conducteurs (34).

9. Capteur de pression selon la revendication 8,
**caractérisé en ce**
**que** dans une première couche de tissu (26), les fils électriquement conducteurs (32) s'étendent dans une première direction et dans une deuxième couche de tissu (28), les fils électriquement conducteurs (32) s'étendent dans une deuxième direction, laquelle s'étend transversalement à la première direction.
